# DEMANDE DE BREVET EUROPEEN

(11) **EP 0 637 005 A1**
(43) Date de publication de la demande: **01.02.1995**
(21) Numéro de dépôt: 94401677.3
(22) Date de dépôt: 21.07.1994
(51) Int. Cl.: G09F 9/35, G02F 1/1335

(54) **Dispositif de visualisation à cristaux liquides et procédé pour diminuer la luminosité à grand angle de vue d'un tel dispositif**

(30) Priorité: 29.07.1993 FR 9309349
(71) Demandeur: SEXTANT AVIONIQUE S.A., F-92366 Meudon la Forêt Cédex (FR)
(72) Inventeur: Cordier, Maurice, F-75012 Paris (FR); Veislinger, Bernard, F-95620 Parmain (FR)
(74) Mandataire: Bloch, Gérard

(57) **Abrégé**

L'invention a pour objet un dispositif de visualisation à cristaux liquides comprenant une source de lumière (1) et une matrice (4) à cristaux liquides fonctionnant en transmission.

Selon l'invention, il comprend une plaque de fibres optiques (6; 6') entre la source de lumière et la matrice.

## Description

La présente invention concerne un dispositif de visualisation à cristaux liquides du type comprenant au moins une source de lumière et une matrice à cristaux liquides fonctionnant en transmission, ainsi qu'un procédé pour diminuer la luminosité parasite à grand angle de vue d'un tel dispositif.

Ce type de matrice est constitué principalement par deux plaques de verre dont les faces en vis-à-vis sont garnies notamment d'électrodes, de couches de passivation et de couches d'alignement. L'écartement de ces plaques de verre est maintenu constant par des espaceurs pouvant être du type micro-billes. Ces plaques sont scellées à leur périphérie par un joint étanche afin de constituer une ampoule hermétique. Cette ampoule est remplie par la solution active constituée d'un mélange de cristaux liquides de types nématiques. Chacune des faces externes de ces plaques de verre est garnie d'un film polariseur linéaire, les axes optiques de ces deux polariseurs pouvant être soit alignés soit orthogonaux.

La matrice peut être également du type matrice active dans laquelle chaque électrode commandant un point élémentaire de l'écran, est alimentée par un transistor assurant la mémorisation de l'information entre deux cycles de rafraîchissement. Ces matrices peuvent être soit monochromes soit en couleur par l'interposition de filtres colorés entre l'électrode de la plaque avant (appelée contre-électrode) et la couche d'alignement.

La source de lumière peut être constituée par un ou plusieurs dispositifs émetteurs de lumière pouvant être du type lampes à incandescence ou plus fréquemment tubes fluorescents. Pour améliorer l'efficacité de cette source de lumière un réflecteur est généralement placé derrière les dispositifs émissifs. Un dispositif diffuseur est généralement placé devant cette source de lumière afin d'améliorer l'homogénéité de l'éclairement de la face arrière de l'écran à cristaux liquides.

La qualité de l'image présentée par un dispositif à matrice, notamment couleur, à cristaux liquides est fonction de l'angle sous lequel on examine l'écran. La dégradation observée aux grands angles de vue est due à une baisse du contraste, celui-ci étant exprimé comme le rapport de la luminance de l'écran aux états passant et bloquant du cristal liquide. Cette baisse en fonction de l'angle de vue est due pour une faible part à la baisse de la luminance de l'état passant, et principalement à l'augmentation de la luminance de l'état bloquant. Ce dernier effet provient de la propagation des rayons lumineux émis par la source de lumière dans un milieu non parfaitement isotrope (biréfringence résiduelle) selon une direction différente de celle de l'axe privilégié. Dans ces conditions, la matrice à cristaux liquides ne joue plus qu'imparfaitement son rôle de valve de lumière.

Les solutions généralement employées pour réduire ce défaut consistent à intercaler un film de compensation entre la cellule proprement dite et le polariseur avant. Ce film présente une biréfringence complémentaire de la biréfringence résiduelle de la matrice à cristaux liquides. Toutefois, les films existant à ce jour ne compensent que partiellement le défaut précité.

Par ailleurs, dans les applications aéronautiques, les écrans à cristaux liquides connus présentent un autre inconvénient que celui de la baisse du contraste aux forts angles de vue. En effet, comme on l'a vu ci-dessus la baisse de contraste est due essentiellement à l'augmentation de la luminance de l'écran à l'état bloquant. Il en résulte un fort niveau de lumière parasite émis dans les directions des grands angles de vue. Par conséquent, dans le cas d'un appareil piloté par un pilote et un co-pilote situés côte à côte, celui qui n'a pas l'écran sous les yeux non seulement ne peut le consulter du fait de son manque de contraste, mais il est de surcroît ébloui par la lumière parasite.

La présente invention vise à palier ces inconvénients.

A cet effet, l'invention a tout d'abord pour objet un dispositif de visualisation à cristaux liquides comprenant une source de lumière et une matrice à cristaux liquides fonctionnant en transmission, caractérisé par le fait qu'il comprend une plaque de fibres optiques entre la source de lumière et la matrice à cristaux liquides.

Comme on le verra ci-après, la présence de la plaque de fibres optiques entraîne plusieurs conséquences favorables.

En premier lieu, la luminance à fort angle de vue est diminuée aussi bien pour l'état passant que pour l'état bloquant. Il en résulte une baisse d'ensemble de la luminosité de l'écran aux grands angles de vue, ce qui a pour effet d'éviter l'éblouissement des personnes ne se trouvant pas en vis-à-vis de l'écran.

Par ailleurs, la plaque de fibres optiques assure le rôle de diffuseur dans le domaine angulaire utile avec comme avantage une très forte luminosité transmise dans ce domaine. Si la luminosité à faible angle de vue de l'état bloquant n'est que faiblement diminuée, celle de l'état passant est augmentée ce qui a pour effet d'augmenter globalement la luminosité de l'écran aux faibles angles de vue mais également d'augmenter son contraste.

L'invention permet donc non seulement de diminuer la luminosité parasite de l'écran aux grands angles de vue mais également d'en augmenter le contraste aux faibles angles de vue.

Dans le cas où le dispositif comprend un polariseur de part et d'autre de la matrice, la plaque de fibres optiques est de préférence disposée entre la source de lumière et le polariseur arrière.

L'ouverture numérique de fibres constituant la plaque de fibres optiques est choisie en fonction des caractéristiques propres de la matrice et du domaine de vision recherché, mais une valeur convenable est généralement comprise entre environ 0,5 et environ 0,7.

Dans la plupart des applications aéronautiques, les instruments de la planche de bord sont situés plus bas que les yeux du pilote ce qui signifie que, dans le plan vertical, les écrans sont toujours vus sous un angle positif. Afin d'optimiser la luminosité de l'écran sous l'angle de vue préférentiel, il est intéressant d'orienter l'axe des fibres optiques constituant la plaque dans le plan vertical selon cet angle préférentiel. Il est à noter que le décalage de l'axe optique des fibres dans le plan vertical peut être choisi identique à celui pour lequel le contraste de la matrice est optimal dans ce plan vertical.

Pour les applications aéronautiques où certains instruments sont situés entre les deux pilotes, il peut être nécessaire d'augmenter le domaine de lisibilité de l'écran. A cet effet, un réseau de diffraction peut être disposé devant le polariseur avant de la matrice à cristaux liquides. Ce réseau est caractérisé par le profil de ses traits, celui-ci pouvant être, à titre d'exemple, soit semi-circulaire, soit sinusoïdal. La direction des traits est sensiblement verticale.

La présente invention a également pour objet un procédé pour diminuer la luminosité à grand angle de vue d'un dispositif de visualisation à cristaux liquides comprenant une source de lumière et une matrice à cristaux liquides fonctionnant en transmission, caractérisé par le fait que l'on interpose une plaque de fibres optiques entre la source de lumière et la matrice.

On décrira maintenant, à titre d'exemple non limitatif, des modes de réalisation particuliers de l'invention en référence aux dessins schématiques annexés dans lesquels :
- la fig. 1 est une vue en perspective éclatée d'un écran selon l'invention;
- la fig. 2 est une vue de face d'une plaque de fibres optiques;
- la fig. 3 est une vue en coupe selon la ligne III-III de la fig. 2;
- la fig. 4 est une vue similaire à la fig. 3, d'une variante de réalisation; et
- les fig. 5 et 6 illustrent les résultats obtenus grâce à l'invention.

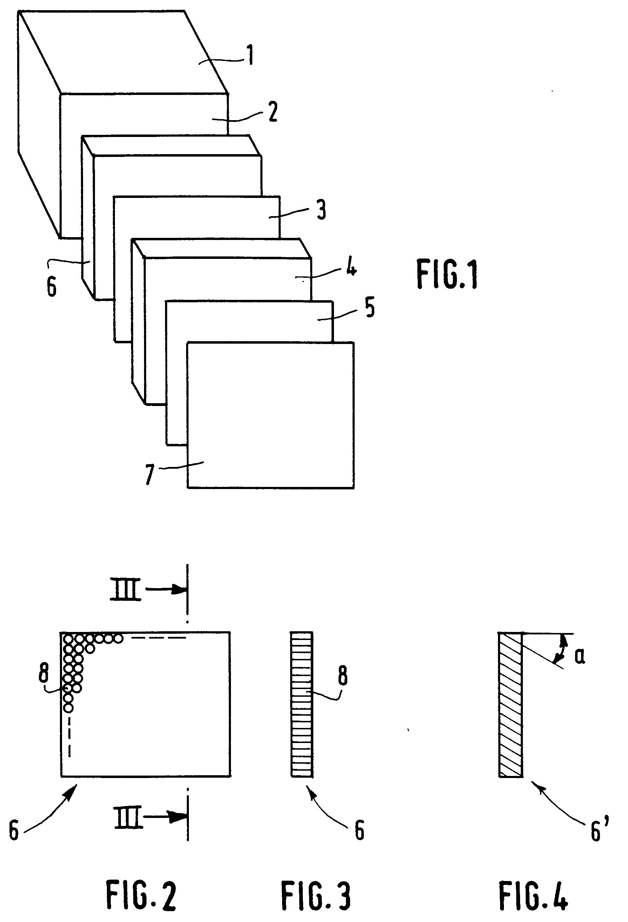

L'écran de la fig. 1 comprend de façon connue une boîte de lumière 1 contenant des tubes fluorescents et fermée en face avant par une plaque 2 formant diffuseur, un polariseur arrière 3, une matrice à cristaux liquides 4, et un polariseur avant 5. Ces organes sont empilés dans cet ordre depuis le plus éloigné jusqu'au plus rapproché de l'utilisateur.

Selon l'invention, on place entre la boîte de lumière 1 et la matrice 4 à cristaux liquides, en fait entre la boîte 1 et le polariseur arrière 3, une plaque de fibres optiques 6, ainsi, éventuellement, qu'un réseau de diffraction 7 en avant du polariseur avant 5.

Les plaques de fibres optiques telle que la plaque 6 sont bien connues et sont disponibles dans le commerce.

Une telle plaque est constituée d'une multitude de fibres optiques 8 disposées côte à côte perpendiculairement au plan général de la plaque.

En variante, les axes des fibres optiques peuvent être inclinées d'un angle a, par exemple de l'ordre de 10 degrés, par rapport à une perpendiculaire au plan de la plaque afin d'optimiser l'orientation des faisceaux émis avec l'axe préférentiel de la matrice.

L'ouverture numérique des fibres optiques 8 constitutives de la plaque 6 est choisie pour garantir un diagramme de rayonnement compatible avec les performances de la matrice, par exemple de l'ordre de 0,5 à 0,7.

La boîte de lumière 1 et la plaque de fibres optiques 6 constituent en fait une nouvelle source de lumière dont le diagramme de rayonnement est compatible avec le domaine où la matrice assure correctement son rôle de valve de lumière.

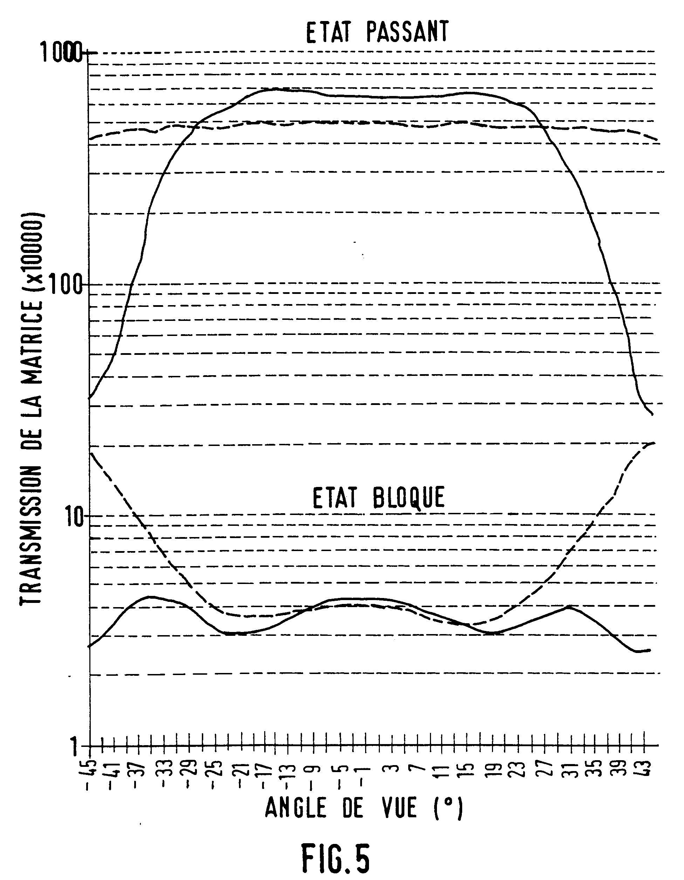

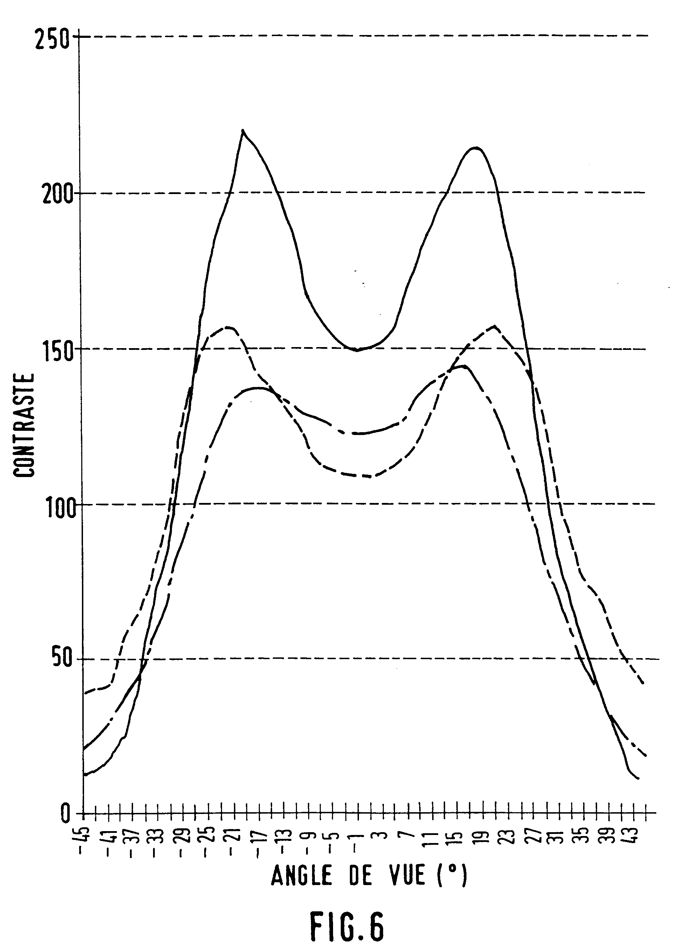

La fig. 5 représente en fonction de l'angle de vue la transmission de la matrice (x 1000) sans plaque de fibres optiques en traits interrompus et selon l'invention en traits pleins. La figure 6 représente de la même manière le contraste de la matrice.

On constate les excellentes performances de l'écran réalisé selon l'invention. En effet, la présence de la plaque de fibres optiques a pour effet d'abaisser la transmission aux grands angles de vue dans un rapport de 10 et par conséquent de diminuer dans le même rapport le rayonnement parasite à ces angles de vue.

Simultanément, aux faibles angles de vue, la transmission est à peu près la même pour l'état bloquant mais est augmentée à l'état passant ce qui augmente par conséquent le contraste à ces faibles angles de vue.

Dans le cas où l'on place le réseau de diffraction 7 en avant de l'écran, le diagramme de contraste n'est celui décrit précédemment que dans un plan d'observation (en pratique dans le plan vertical), le diagramme dans le plan perpendiculaire étant alors celui représenté en traits mixtes.

## Revendications

**1.-** Dispositif de visualisation à cristaux liquides comprenant une source de lumière (1) et une matrice (4) à cristaux liquides fonctionnant en transmission, caractérisé par le fait qu'il comprend une plaque de fibres optiques (6; 6') entre la source de lumière et la matrice.

**2.-** Dispositif selon la revendication 1, comprenant un polariseur (3, 5) de part et d'autre de la matrice, la plaque de fibres optiques étant disposée entre la source de lumière et le polariseur arrière (3).

**3.-** Dispositif selon l'une quelconque des revendications 1 et 2, dans lequel l'ouverture numérique de la plaque de fibres optiques est comprise entre environ 0,5 et environ 0,7.

**4.-** Dispositif selon l'une quelconque des revendications 1 à 3, dans lequel l'axe des fibres optiques est incliné par rapport à une perpendiculaire au plan de la plaque.

**5.-** Dispositif selon l'une quelconque des revendications 1 à 4 comprenant un réseau de diffraction (7) en avant de la matrice à cristaux liquides.

**6.-** Procédé pour diminuer la luminosité à grand angle de vue d'un dispositif de visualisation à cristaux liquides comprenant une source de lumière et une matrice à cristaux liquides fonctionnant en transmission, caractérisé par le fait que l'on interpose une plaque de fibres optiques entre la source de lumière et la matrice.
